Europäisches Patentamt

European Patent Office

Office européen des brevets

(19)

(11) Numéro de publication: **0 255 561**
**A1**

(12) **DEMANDE DE BREVET EUROPEEN**

(21) Numéro de dépôt: **86401718.1**

(22) Date de dépôt: **31.07.86**

(51) Int. Cl.⁴: **C08L 63/00** , C08J 5/24 ,
//(C08L63/00,67:06)

Le titre de l'invention a été modifié (Directives relatives à l'examen pratiqué à l'OEB, A-III, 7.3)

(43) Date de publication de la demande:
**10.02.88 Bulletin 88/06**

(84) Etats contractants désignés:
**AT BE CH DE GB IT LI LU NL SE**

(71) Demandeur: **AEROSPATIALE Société Nationale Industrielle**
**37, Boulevard de Montmorency**
**F-75781 Paris Cédex 16(FR)**

(72) Inventeur: **Poussin, Didier**
**36, Allée du Mail**
**F-92360 Meudon la Foret(FR)**
Inventeur: **Daviaud, Raymond**
**6, rue Calixte Camille**
**F-33400 Talence(FR)**
Inventeur: **Vignollet, Michel**
**68, Villepreux-Village Saint Aubin du Medoc**
**F-36160 Saint-Medard-en-Jalles(FR)**

(74) Mandataire: **Mongrédien, André et al**
**c/o BREVATOME 25, rue de Ponthieu**
**F-75008 Paris(FR)**

(54) **Matériau composite comportant une matrice de réseaux polyepoxyde-polyester de structure interpénétrée.**

(57) La matrice organique servant de liant à des fibres organiques ou inorganiques est formée d'un premier et d'un second réseaux interpénétrés, le premier réseau étant un réseau à base de polyépoxyde et le second réseau un réseau à base de polyester possédant un coefficient d'allongement à la rupture allant de 5 à 100%.

EP 0 255 561 A1

## MATERIAU COMPOSITE COMPORTANT UNE MATRICE DE RESEAUX POLYEPOXYDE-POLYESTER INTER-PENETRES

La présente invention a pour objet un matériau composite de haute performance comportant une matrice de réseaux polymériques interpénétrés.

Les matériaux composites sont constitués d'éléments tels que des fibres (courtes ou longues) liées entre elles par une matrice en résine thermodurcissable, réparties régulièrement dans le volume du matériau ; ces fibres jouent principalement le rôle de renfort de la résine thermodurcissable.

Les matériaux composites trouvent une application dans des secteurs techniques nombreux et variés tels que les industries aéronautiques, automobiles, spatiales et sous-marines.

Ils sont principalement utilisés pour fabriquer par moulage, drapage, bobinage ou injection des pièces mécaniques telles que des pièces creuses, des tubes etc... ; à titre d'exemple non limitatif, on peut citer des enveloppes de propulseurs d'engins balistiques ainsi que certains types de bouteilles et de réservoirs.

Dans ces matériaux composites, le liant organique joue un rôle prépondérant dans les propriétés mécaniques et thermomécaniques de ces matériaux. Si pour des matériaux composites grande diffusion, l'optimisation de ces propriétés n'apparaît pas capitale, elle le devient dans le cas de matériaux composites à haute performance pouvant rivaliser avec les matériaux métalliques.

La mise en oeuvre de ces matériaux composites constitue, également, un paramètre important pour la qualité du produit final en particulier lorsque celui-ci est une pièce creuse réalisée sur un mandrin, par enroulement filamentaire de fibres imprégnées de résine thermodurcissable.

Les propriétés thermomécaniques des matériaux composites sont généralement limitées par les caractéristiques de la matrice organique servant de liant entre les fibres. En particulier, l'une des grandes difficultés rencontrées réside dans l'impossibilité de concilier le besoin de tenue mécanique et celui d'un minimum de souplesse ou d'élongation à la rupture ; cette dernière caractéristique est nécessaire pour permettre un bon travail des fibres dans le matériau composite. Par ailleurs, il est difficile d'éviter les craquelures prématurées de la matrice organique au cours de sollicitations, préjudiciables pour la tenue au veillissement, ainsi que de diminuer la fragilité des matériaux composites lors de leur utilisation.

En particulier, les matériaux polymériques ou résines haute température, tels que les résines époxydes ou polyimides, généralement utilisés dans la fabrication des matériaux composites possèdent un coefficient d'allongement à la rupture inférieur ou égal à celui des fibres de renfort (2%) constituant les matériaux composites ; ces matériaux polymériques sont donc trop fragiles pour réaliser des matériaux composites performants.

En effet, on sait que l'élongation à la rupture de la matrice organique doit être au minimum égale à celle des fibres pour permettre un bon transfert des efforts à celles-ci, un minimum de 2% est en général requis, mais des valeurs plus élevées sont en général souhaitées pour accroître les coefficients de sécurité. Ceci permet de conférer à la matrice une meilleure tenue au choc et au vieillissement humide car toute craquelure prématurée de la matrice, est une porte ouverte aux agents de dégradation des fibres et des résines ou de l'interface fibre-résine.

Des tentatives d'assouplissement de ces matériaux polymériques par ajout de plastifiants, d'élastomères, de flexibilisants, s'effectuent toujours au détriment de la tenue thermique de la matrice organique et donc du matériau composite. A ce stade se pose souvent le problème de la compatibilité entre la charge et la matrice organique.

Cet effet tient à la structure des polymères thermodurcissables utilisés. Un allongement élevé des matériaux polymériques est obtenu quand la mobilité des chaînes moléculaires de ces matériaux est importante, cette mobilité étant maximale à la température de transition vitreuse, notée Tg, température à partir de laquelle le polymère perd sa rigidité.

Les résines thermodurcissables, actuellement utilisées dans la fabrication d'un matériau composite à haute performance, possèdent des propriétés insuffisantes ; il est notamment difficile d'obtenir un bon compromis entre les propriétés suivantes :

-contrainte à la rupture en traction,

-allongement à la rupture en traction,

-haute température de transition vitreuse.

Il est cependant possible d'améliorer ce compromis en suivant différentes voies telles que la synthèse de nouveaux monomères, la mise au point de copolymères à partir d monomères connus ou le mélange de polymères connus. Mais ces différentes solutions présentent un certain nombre d'inconvénients.

En particulier, la synthèse de nouveaux monomères demande des études longues et coûteuses ; or actuellement celles-ci s'orientent plutôt vers les monomères thermoplastiques. En conséquence, les monomères classiques, principalement utilisés dans les polyméres ou résines thermodurcissables, ne semblent donc pas devoir être rapidement remplacés.

C'est pourquoi, les recherches s'orientent actuellement vers la mise au point de copolymères ou de mélanges de polymères connus. En particulier, il a été réalisé un copolymère à base de N,N'tétraglycidyl méthylène dianiline (TGMDA sous forme abrégée) et de diglycidyl éther du bisphénol A (DGEBA sous forme abrégée) réticulé avec de la 4,4' diaminodiphénylsulfone (DDS sous forme abrégée) ; ce copolymère comprend en parties pondérales, 50 pp de TGMDA, 50 pp de DGEBA et 40 pp de DDS. Le copolymère obtenu présente un allongement à la rupture de 4%, au lieu de 2% pour uniquement une réticulation TGMDA/DDS, mais une température de transition vitreuse (Tg) basse de l'ordre de 225°C, contre 265°C pour uniquement une réticulation TGMDA/DDS.

Par ailleurs, il s'est développé une technique d'interpénétration consistant à mélanger le monomère de deux ou trois constituants polymériques et à les faire polymériser l'un en présence de l'autre, tout en évitant leur copolymérisation ; ceci est obtenu en utilisant des constituants du mélange ayant des mécanismes réactionnels de polymérisation le plus possible indépendants l'un de l'autre.

Il existe déjà de nombreuses applications de cette technique. On peut par exemple citer la fabrication de membranes échangeuses d'ions ou de revêtements aux propriétés amortissantes. Ainsi le brevet américain n° 4 250 074 et la demande de brevet PCT n°8 800 847 présentent un revêtement dur et résistant à la dégradation thermique constitué de deux réseaux polymériques interpénétrés, ou entrelacés ; l'un des réseaux est formé d'unerésine époxyde, l'autre d'une résine polysiloxane.

Ces brevets mettent notamment en évidence deux principaux atouts de la technique d'interpénétration qui sont la naissance de polymère aux propriétés amortissantes remarquables et l'obtention d'un produit final possédant simultanément les propriétés physico-chimiques des deux constituants polymériques utilisés.

Comme autres réseaux polymériques interpénétrés connus, on peut citer des réseaux polyépoxydepolyacrylate, des réseaux polyuréthane-polyépoxyde, des réseaux polyuréthane-polyacrylate-polyépoxyde, et des réseaux polyépoxyde-polyester.

Des réseaux polyépoxyde-polyacrylate sont notamment décrits dans les articles de :

-DUBUISSON A., ADES D., FONTANILLE M., Polym. Bulletin (Berlin) 1980, 3(6-7), 391

-SPERLING L.H, ARNTS R.R., J.Appl. Polym-Sci., 1971, 15(9), 2317.

Des réseaux polyuréthane-polyépoxyde sont notamment décrits dans l'article de FRISCH K.C., KLEMPNER D., J.Appl. Polym. Sci., 1974, 18(3), 689.

Des réseaux polyuréthane-polyacrylate-polyépoxyde sont notamment décrits dans l'article de K.C. FRISCH et D. KLEMPNER intitulé "Recent advances in interpenetrating polymer networks" paru dans "Polymer Engineering and Science" de mi-décembre 1982, vol.22, n° 17, pages 1143 à 1152.

Les différents réseaux polymériques interpénétrés, donnés précédemment, présentent des propriétés notamment mécaniques et thermiques insuffisantes pour une application industrielle visant les performances envisagées par la présente invention.

Dans l'article de FRICH et al., ci-dessus, il est, par ailleurs, décrit l'association d'un matériau polymérique, formé d'un réseau de polyuréthane et d'un réseau polyépoxyde interpénétrés, et de fibres de verre de courte longueur. L'objectif visé par cette association est d'améliorer les propriétés mécaniques et thermiques des pièces moulées par injection, mais les résultats ne sont pas concluants.

On connaît par ailleurs du document FR-A-2 529 215, un procédé de fabrication de réseaux interpénétrés notamment polyépoxyde-polyester. L'objectif de ce prodédé est de faciliter la fabrication de réseaux interpénétrés sans s'occuper des propriétés mécaniques et thermiques de la matrice organique résultante. Or, pour les applications industrielles envisagées, la matrice organique doit présenter d'excellentes qualités thermiques et mécaniques.

La présente invention a justement pour objet un matériau composite de haute performance permettant de remédier aux différents inconvénients donnés ci-dessus. En particulier, elle permet d'obtenir un meilleur compromis, que les résines époxydes généralement utilisées dans la fabrication de matériaux composites, en ce qui concerne la tenue thermique et l'allongement à la rupture, nécessaire pour conférer à ces matériaux composites une meilleure performance (bon travail des fibres), une meilleure résistance aux chocs (souplesse améliorée) et une meilleure tenue au vieillissement (pas de craquelures de résine).

L'invention est basée sur l'utilisation d'un matériau polymérique formé d'un premier et d'un second réseaux polymériques ou copolymériques interpénétrés.

De façon plus précise, l'invention a pour objet un matériau composite comportant une matrice en polymère renforcée par des fibres organiques ou inorganiques et formée d'un premier réseau à base de polyépoxyde et d'un second réseau à base de polyester, interpénétrés, caractérisé en ce que le réseau polyes ter possède un coefficient d'allongement à la rupture allant de 5 à 100%.

L'utilisation d'un réseau polymérique interpénétré de polyépoxyde et de polyester par rapport à un réseau époxyde seul permet d'augmenter sensiblement l'élongation à la rupture du matériau polymérique sans abaisser trop fortement sa tenue thermique et donc celle du matériau composite formé d'un tel matériau polymérique. En effet, le réseau polyester selon l'invention joue le rôle d'assouplissant du réseau polyépoxyde.

De façon avantageuse, le réseau polyester possède un coefficient d'allongement à la rupture allant de 40 à 60% et de préférence voisin de 52%.

De façon avantageuse, la matrice du matériau composite comprend, en poids 99 à 50% de premier réseau et 1 à 50% de second réseau. Selon ces proportions, les propriétés de la matrice polymérique vont se rapprocher soit de celles du polyester (faible tenue thermique et souplesse), soit de celles du polyépoxyde (forte tenue thermique et rigidité). Le choix de ces proportions dépend principalement de l'application envisagée pour ces matériaux composites.

De préférence, le matériau composite comprend, en poids, 80% de premier réseau et 20% de second réseau.

Avantageusement, le premier réseau est obtenu par polymérisation et/ou réticulation ioniques et le second réseau par polymérisation et/ou réticulation radicalaires.

De préférence, le premier réseau est un réseau à base de N,N' tétraglycidyl méthylène dianiline (TGMDA).

La polymérisation et/ou réticulation du premier réseau, et en particulier lorsque celui-ci est à base de TGMDA, peut être obtenue en utilisant une diamine telle que la 4,4' diaminodiphénylsulfone.

De façon préférentielle, le second réseau est formé par polymérisation et/ou réticulation d'un polyester insaturé et d'un monomère possédant une double liaison réactive. Comme monomère possédant une double liaison réactive on peut par exemple utiliser le styrène.

L'un des polyesters insaturés utilisables dans l'invention est de préférence un adipate de diéthyléne glycol modifié par un diacide insaturé ; comme diacide insaturé on peut utiliser par exemple les acides et/ou leurs anhydrides maléiques, fumariques, itaconiques....

Les fibres entrant dans la constitution du matériau composite, décrit précédemment, peuvent avantageusement être des fibres de carbone.

D'autres caractéristiques et avantages de l'invention ressortiront mieux de la description qui va suivre, donnée à titre d'exemple illustratif mais non limitatif.

Selon l'invention, le matériau composite est constitué d'une matrice organique renforcée par des fibres organiques ou inorganiques qui peuvent être courtes ou longues, ces fibres sont réalisées par exemple en verre, en kevlar, en carbone, en silice, en carbure de silicium, en aluminosilicate de bore, en alumine, etc... La matrice organique, servant de liant à ces fibres, est formée de deux réseaux polymériques interpénétrés ou entrelacés, le premier réseau étant un réseau polyépoxyde et le second réseau un réseau polyester présentant un coefficient d'allongement à la rupture supérieur à 5% et en particulier allant de 40 à 60%.

Un grand nombre de couples polyépoxyde-polyester peuvent être utilisés pour former la matrice organique du matériau composite. Toutefois la polymérisation et/ou la réticulation des deux réseaux polymériques doivent être le plus indépendantes possible afin d'éviter leur copolymérisation, étant donné que la technique d'interpénétration consiste à mélanger les monomères servant à former les deux réseaux et à les faire polymériser les uns en présence des autres.

Comme résines époxydes entrant dans la constitution du premier réseau, on peut utiliser par exemple la N,N' tétraglycidyl méthylène dianiline (TGMDA sous forme abrégée) le diglycidyl éther du bisphénol A (DGEBA sous forme abrégée), le diglycidyl éther du bisphénol F (DGEBF sous forme abrégée), les résines novolac telles que le polyglycidyl éther de phénol et le polyglycidyl éther de 0-cresol, le triglycidyl paraamino-phénol, les résines époxydes cycloaliphatiques, etc... Pratiquement, toutes les résines époxydes ainsi que leur mélange, en sélectionnant éventuellement le durcisseur ou réticulant de celles-ci, peuvent être utilisées.

Avantageusement, on utilise comme résine époxyde la NN' tétraglycidyl méthylène dianiline, car cette résine époxyde procure aux matériaux composites correspondants les meilleures caractéristiques thermiques.

4

De façon connue, le réseau polyépoxyde est obtenu en polymérisant et/ou réticulant au moins un monomère époxyde au moyen d'un ou plusieurs durcisseurs. Celui-ci peut par exemple être une amine, et en particulier, une diamine telle que la 4,4' diaminodiphénylsulfone (DDS) et ses dérivés, la 4,4' méthylène dianiline (MDA) et ses dérivés, la m-phénylène diamine (MpDA) et ses dérivés. Comme autres durcisseurs, on peut utiliser les durcisseurs de type anhydride tels que le nadic méthyl anhydride (NMA), le phtalic anhydride (pA), le triméllitic anhydride (TMA) etc... On peut aussi utiliser des agents catalytiques tels que l'octoate d'étain, le dicyanodiamide, le complexe de trifluorure de bore et d'éthylamine (BF3MEA) et des acides de Lewis tels que le trifluorure de bore.

Le choix du durcisseur dépend des monomères époxydes et des esters utilisés de façon à conserver l'indépendance de polymérisation et/ou de réticulation de la résine époxyde et du polyester.

Lorsque la résine époxyde est la NN' tétraglycidyl méthylène dianiline, on choisit de préférence comme durcisseur la 4,4' diamino diphénylsulfone.

De façon avantageuse, la polymérisation et/ou la réticulation de la résine époxyde au moyen de son durcisseur est effectuée en respectant la règle de la stoechiométrie entre les fonctions chimiques du durcisseur et l'oxirane du monomère époxyde. Cette stoechiométrie permet d'obtenir les meilleures propriétés en ce qui concerne la température de transition vitreuse (Tg) et les coefficients de contrainte et d'allongement à la rupture.

On peut par exemple envisager de polymériser et/ou de réticuler la DGEBA par la DDS avec des parties pondérales (pp) respectivement de 100 pp et 35 pp. De même, on peut envisager de polymériser et/ou de réticuler la TGMDA par le NMA dans des parties pondérales respectivement de 100 pp et 110 pp.

Pour constituer le réseau polyester interpénétré ou entrelacé avec le réseau polyépoxyde, un grand nombre de polyesters réticulés peuvent être utilisés. Toutefois, ces derniers jouant le rôle d'assouplissant étant donné que les résines époxydes sont généralement rigides, ils doivent posséder un coefficient d'allongement supérieur à environ 5%, par exemple allant de 40 à 60% et de préférence de l'ordre de 52%.

Pour ces deux raisons, assouplissement et indépendance réactionnelle, on utilise de façon avantageuse, comme polyester des prépolymères (polyester) insaturés assez longs, ayant par exemple une masse molaire en nombre comprise entre 500 et 3000, polymérisés et/ou réticulés au moyen de monomères possédant une double liaison réactive.

Par ailleurs, pour éviter une interaction trop marquée avec les monomères époxydes et leurs durcisseurs, l'indice d'acide de ces polyesters insaturés ne doit pas être trop élevé ; cet indice d'acide est par exemple inférieur à 50 et de préférence égal à 40 ± 5.

Les polyesters insaturés utilisables peuvent être obtenus par réaction d'estérification d'un diacide aromatique ou non aromatique tel que l'acide orthophtalique, isophtalique, téréphtalique, maléique, fumarique, adipique, sébacique,... et/ou leurs mélanges, et d'un diol qui peut être de tout type tel que l'éthylène glycol, le propylène glycol, le butylène glycol, l'hexane diol, le diéthylène glycol, le polyéthylène glycol, le polyoxybutylène glycol et/ou leurs mélanges.

Le prépolymère ou polyester insaturé obtenu peut être polymérisé et/ou réticulé avec au moins un monomère possédant une double liaison réactive comme par exemple le styrène, le méthylstyrène, le divinylbenzène, le méthylméthacrylate, le méthylacrylate, l'isooctylacrylique et méthacrylique et/ou leurs mélanges.

La polymérisation et/ou réticulation du polyester insaturé avec le monomère possédant une double liaison réactive peut être effectuée en respectant ou non la règle de la stoechiométrie entre les fonctions chimiques du monomère et du polyester.

De façon particulièrement intéressante le réseau polyester est formé par polymérisation et/ou réticulation de l'adipate de diéthylène glycol modifié par l'anhydride maléique comme polyester insaturé. De préférence, on utilise le styrène comme agent réticulant.

Comme on l'a dit précédemment, le polyester réticulé utilisé dans la constitution de la matrice organique du matériau composite doit être formé le plus possible de façon indépendante du réseau polyépoxyde c'est-à-dire sans copolymérisation. En particulier, pour une technique d'interpénétration utilisant la polymérisation et/ou réticulation simultanées du réseau polyépoxyde et du polyester, on utilise des monomères époxydes et des esters ayant des mécanismes de polymérisation et/ou de réticulation différents.

Par exemple pour des résines époxydes se polymérisant et/ou se réticulant selon un mécanisme ionique, comme par exemple les différentes résines citées précédemment, on peut notamment utiliser des polyesters tels que ceux décrits ci-dessus, dont le mécanisme de polymérisation et/ou de réticulation est radicalaire.

Dans un mécanisme de polymérisation et/ou de réticulation radicalaire, il est préférable d'utiliser des initiateurs de polymérisation et/ou de réticulation qui peuvent être dans le cas du polyester insaturé soit, des initiateurs thermiques tels que le péroxyde de dicumyle, le péroxyde de terbutyle, le perbenzoate de terbutyle, l'hydropéroxyde de cumène soit, des photoinitiateurs tels que la benzophénone, les éthers de benzoïne, les esters de cétoxime...

Afin d'éviter une interaction trop marquée entre les monomères de base (époxyde et polyester) qui conduirait à la formation de simples copolymères, on a recours à des mises en oeuvre particulières.

On peut par exemple jouer sur les vitesses respectives de formation des deux réseaux polymériques, l'un se faisant très rapidement en présence des monomères du deuxième réseau, ce dernier se formant ensuite en présence du premier réseau polymérisé et/ou réticulé.

Une autre façon pour réaliser la matrice organique des deux réseaux interpénétrés de polyépoxyde et de polyester est de former les deux réseaux polymériques l'un après l'autre. Ceci peut se faire en formant par polymérisation et/ou réticulation le premier réseau, en particulier le réseau polyester, puis en le gonflant par une composition liquide des monomères devant constituer le second réseau, et notamment le réseau polyépoxyde. On initie ensuite la polymérisation et/ou réticulation des monomères constituant le second réseau qui polymérise et/ou réticule en présence du premier réseau.

Selon l'invention, la matrice polymérique du matériau composite est formée avantageusement en poids, 99 à 50% du réseau polyépoxyde et 1 à 50% du réseau polyester. Selon ces proportions, les propriétés de la matrice du matériau composite vont se rapprocher soit de celles du réseau polyester, soit de celles du réseau polyépoxyde. Le réseau polyester qui présente une faible tenue thermique, ne doit pas représenter plus d'environ 50%, en poids, de la matrice organique sous peine d'obtenir des températures de transition vitreuse (Tg) trop faibles.

Par ailleurs, il ne doit pas représenter moins de 1%, en poids, de la matrice organique, étant donné son rôle d'assouplissant pour obtenir des coefficients d'allongement à la rupture en traction au moins égaux à ceux des fibres organiques ou inorgani ques liées entre elles par la matrice organique du matériau composite. Une proportion, en poids, d'environ 80% du réseau polyépoxyde et d'environ 20% de réseau polyester apporte un bon compromis entre la souplesse de la matrice et sa tenue thermique.

On va maintenant donner un exemple particulier de fabrication d'une matrice organique d'un matériau composite, conformément à l'invention, comprenant, en poids, 80% d'une résine époxyde et 20% d'un polyester réticulé interpénétrés.

On prépare tout d'abord, à environ 135°C, une première composition liquide polymérisable I contenant, comme monomère époxyde, la N,N' tétraglycidyl méthylène dianiline (TGMDA) et, comme durcisseur ou réticulant, la 4,4' diaminodiphénylsulfone. Cette composition I est ensuite refroidie à 70°C. Elle est constituée en parties pondérales, de 100 pp et de 45 pp, soit en pourcentage en poids de 69% de monomère époxyde et de 31% de durcisseur ; cette composition correspond à la stoéchiométrie fonctionnelle, ajustée, entre les fonctions amines du durcisseur et le cycle oxirane de l'époxyde.

Parallèlement, on prépare une seconde composition liquide polymérisable II à partir de laquelle sera formé le réseau polyester insaturé. Cette composition II comprend, comme prépolymère insaturé, l'adipate de diéthylène glycol modifié par l'anhydride maléïque, comme agent de polymérisation et/ou de réticulation, du styrène ainsi que de l'hydroquinone. Cette composition liquide II est constituée, en parties pondérales, de 52 pp de polyester insaturé, de 48 pp de styrène et de 0,01 pp d'hydroquinone.

L'hydroquinone est utilisée comme inhibiteur des premiers radicaux libres formés. Elle évite ainsi une augmentation trop rapide de la viscosité de la seconde composition liquide, notamment lors de l'étape d'imprégnation des fibres de renfort.

Pour démarrer la polymérisation du polyester, 0,1 pp de péroxyde de dicumyle est ajouté la composition II.

Pour obtenir cette composition liquide II, on introduit tout d'abord dans un réacteur, muni de façon connue d'un agitateur, d'un chauffage, d'un système de condensation, le diéthylène glycol, l'anhydride maléïque, l'acide adipique et l'hydroquinone. L'ensemble est porté à 180 ± 5°C en 4 heures. On maintient une température de 180°C pendant 2 heures.

On établit ensuite le vide dans le réacteur (6666 Pa de pression résiduelle) tout en maintenant une température de 180°C. Le vide est maintenu pendant 3 heures et l'opération est arrêtée.

L'indice d'acide du polyester insaturé obtenu est vérifié. Il doit être égal à 40 ± 5.

On rappelle que l'indice d'acide d'une résine correspond au nombre de mg d'hydroxyde de potassium nécessaire pour neutraliser 1g de résine.

A température inférieure à 100°C, la résine polyester ou le prépolymère obtenu est dissous dans le styrène, contenant éventuellement le péroxyde de dicumyle, dans le rapport en poids 52/48 en vue d'obtenir le réseau polyester final.

On donne ci-après dans le tableau I quelques exemples de compositions II et quelques propriétés correspondantes.

Le polyester de l'exemple 5, après durcissement (réticulation) présente encore les caractéristiques physiques suivantes : une masse volumique ($\rho$) à 20° de 1,1546 g/cm$^3$ et une masse molaire entre noeuds de réticulation de 2000 g.

Les compositions liquides époxydes et polyesters I et II étant préparées, comme ci-dessus, on effectue un mélange de ces deux compositions, puis l'on dégaze. La composition organique finale F obtenue est prête pour l'imprégnation des fibres.

Le premier avantage de cette composition F est sa viscosité, ce qui permet d'effectuer une imprégnation des fibres à une température d'environ 25°C inférieure à celle normalement utilisée pour la résine TGMDA non modifiée.

On va maintenant donner un exemple de fabrication d'un matériau composite, tel qu'un anneau N.O.L., constitué de fibres de carbone liées entre elles par une matrice organique de même composition que celle donnée ci-dessus. Cet anneau N.O.L. présente un diamètre intérieur de 146 mm, une largeur de 50 mm et une épaisseur de 3,2 mm ; il est fabriqué, de façon connue, Selon la technique d'enroulement filamentaire.

Après élaboration de la composition organique finale F, on effectue l'imprégnation des fibres de carbone, issues d'une bobine, en les faisant passer dans la composition organique F. Le taux d'imprégnation des fibres de 32% est réglé par l'épaisseur du film de résine qui peut être calibré. Cette imprégnation est réalisée à une température de l'ordre de 75°C.

Les fibres de carbone ainsi imprégnées de résine sont ensuite bobinées sur un mandrin, suivant la technique classique de bobinage filamentaire, pour former l'anneau N.O.l. ; la tension des fibres est de 2 daN et le bobinage de celles-ci sur le mandrin est un bobinage jointif de 2,4 mm/t.

L'étape de bobinage étant achevée, on réalise un chauffage par exemple au four de la structure obtenue afin de polymériser et/ou de réticuler la résine époxyde et le polyester. Cette polymérisation et/ou réticulation peut être faite en élevant la température de l'ambiante jusqu'à 80°C en 6 mn, puis en élevant la température de 80°C à 140°C en 1 heure. La structure est ensuite maintenue à 140°C pendant 2 heures. Après cela, on effectue une nouvelle montée en température de 140°C à 180°C en 2 heures, puis on maintient la structure 180°C pendant 6 heures. Enfin, on laisse se refroidir l'anneau N.O.L. obtenu lentement jusqu'à la température ambiante.

Dans l'exemple ci-dessous, on va montrer l'influence des proportions relatives de la résine époxyde et du polyester sur les propriétés thermiques et mécaniques de la matrice organique d'un matériau composite.

Les différentes mesures ont été réalisées pour des matrices polymériques formées avec les mêmes constituants chimiques que ceux des deux compositions liquides I et II données ci-dessus, le polyester étant celui de l'exemple 5, mais avec des proportions respectives des deux compositions liquides différentes, et en effectuant sur les différentes compositions organiques finales correspondantes le cycle de polymérisation et/ou de réticulation suivant : montée en température de l'ambiante jusqu'à 80°C en 6 min, puis de 80°C à 140°C en 2 heures, maintien de la température de 140°C pendant 2 heures à nouveau, montée en température de 140 à 180°C en 2 heures et enfin maintien de la température à 180°C pendant 6 heures.

Les différents résultats obtenus sont donnés dans le tableau II ci-après.

Dans ce tableau II, $E_u$ représente le module de Young mesuré par ultrasons à 1 MHz, $K_{1c}$ représente le facteur d'intensité de contrainte, et $G_{1c}$ représente l'énergie de rupture, les chiffres entre parenthèses associés aux valeurs de $K_{1c}$ représentent l'erreur en % de $K_{1c}$.

On constate d'après ce tableau que la proportion, en poids, de 80% de résine époxyde et de 20% de polyester permet d'obtenir une matrice organique souple et de bonne tenue thermique.

La description précédente n'a bien entendu été donnée qu'à titre illustratif et non limitatif ; toute modification dans la nature des fibres, dans le choix de la résine époxyde et du polyester ainsi que dans les proportions respectives de ces deux derniers peut être envisagée sans pour autant sortir du cadre de l'invention. On peut par exemple former le réseau polyépoxyde en faisant copolymériser plusieurs monomères époxydes et en utilisant plusieurs durcisseurs. Il en est de même pour le réseau polyester.

Par ailleurs, l'invention ne s'applique pas uniquement à la fabrication d'un anneau N.O.L. par bobinage, mais à tout matériau composite ou pièce en matériau composite obtenu par enroulement filamentaire, moulage, drapage ou injection.

TABLEAU I

| EXEMPLES | | 1 | 2 | 3 | 4 | 5 |
|---|---|---|---|---|---|---|
| Formulation du prépolymère (pp) | Diéthylène glycol | 42,4 | 44,2 | 47,2 | 49 | 43,8 |
| | Anhydride maléïque | 6,0 | 14,7 | 15,2 | 23,6 | 15,1 |
| | Acide adipique | 51,6 | 41,1 | 37,6 | 27,4 | 41,1 |
| | Hydroquinone | 0,01 | 0,01 | 0,01 | 0,01 | 0,01 |
| Propriétés du prépolymère polyester (avant dilution par le styrène) | Indice d'acide | 40 | 36 | 36 | 40 | 37 |
| | Viscosité (poises à 25°C) | 250 | 230 | 100 | 180 | 250 |
| | Masse molaire moyenne en nombre $Mn^*$ (g) | 1700 | 1500 | 1000 | 1000 | 1900 |
| Propriétés du polyester après durcissement | $\sigma_R^{**}$ (MPa) | 4 | 8 | 5 | 16 | 8 |
| | Allongement rupture (%) | 100 | 60 | 60 | 50 | 52 |
| | Module d'Young (MPa) | 18 | 120 | 38 | 420 | 180 |
| | $T_g$ (°C) | -22 | -18 | -20 | -14 | -16 |

\* $Mn = \Sigma n_i M_i / \Sigma n_i$ avec $n_i$ le nombre de molécules de masse $M_i$

\*\* $\sigma_R$ est le coefficient de contrainte à la rupture en traction.

T A B L E A U  II

| Epoxyde/polyester (% pondéral) | 100/0 | 95/5 | 90/10 | 80/20 | 70/30 |
|---|---|---|---|---|---|
| Tg (°C) | 265 | 258 | 255 | 265 | 252 |
| Densité 20°C | 1,242 | 1,239 | 1,237 | 1,230 | 1,225 |
| Contrainte à la rupture (Mpa) | 66 | 76 | 76 | 81 | 79 |
| Elongation à la rupture (%) | 1,6 | 3,3 | 3,3 | 3,9 | 4,7 |
| Module sécant à 1% (Mpa) | 3151 | 3035 | 3225 | 3036 | 2935 |
| Eu (Mpa) Ultrasons 1MHz | 5950 | 5920 | 5850 | 5430 | 5100 |
| K1c Mpa $\sqrt{m}$ | 0,59 [13] | 0,58 [12] | 0,68 [12] | 0,68 [17] | 0,72 [11] |
| $G1c=\dfrac{K1c^2}{Eu}$ (J/m$^2$) | 58,5 | 56,8 | 79,0 | 85,2 | 101,6 |

0 255 561

## Revendications

1. Matériau composite comportant une matrice en polymère renforcée par des fibres organiques ou inorganiques et formée d'un premier réseau à base de polyépoxyde et d'un second réseau à base de polyester, interpénétrés, caractérisé en çe que le réseau polyester possède un coefficient d'allongement à la rupture allant de 5% à 100%.

2. Matériau composite selon la revendication 1, caractérisé en ce que le réseau polyester possède un coefficient d'allongement à la rupture allant de 40% à 60%.

3. Matériau composite selon la revendication 1 ou 2, caractérisé en ce que le réseau polyester possède un coefficient d'allongement à la rupture voisin de 52%.

4. Matériau composite selon l'une quelconque des revendications 1 à 3, caractérisé en ce que le second réseau est formé par polymérisation et/ou réticulation d'un polyester insaturé et d'un monomère possédant une double liaison réactive.

5. Matériau composite selon l'une quelconque des revendications 1 à 4, caractérisé en ce que le polyester insaturé présente un indice d'acide inférieur à 50.

6. Matériau composite selon la revendication 4 ou 5, caractérisé en ce que le polyester insaturé est de l'adipate de diéthylène glycol modifié par l'anhydride maléïque.

7. Matériau composite selon l'une quelconque des revendications 4 à 6, caractérisé en ce que le monomère possédant une double liaison réactive est le styrène.

8. Matériau composite selon l'une quelconque des revendications 1 à 7, caractérisé en ce que la matrice comprend, en poids, 99 à 50% de premier réseau et 1 à 50% de second réseau.

9. Matériau composite selon l'une quelconque des revendications 1 à 8, caractérisé en ce que la matrice comprend, en poids, 80% de premier réseau et 20% de second réseau.

10. Matériau composite selon l'une quelconque des revendications 1 à 9, caractérisé en ce que le premier réseau est obtenu par polymérisation et/ou réticulation ioniques et le second réseau par polymérisation et/ou réticulation radicalaires.

11. Matériau composite selon l'une quelconque des revendications 1 à 10, caractérisé en ce que le premier réseau est un réseau à base de N,N' tétraglycidyl méthylène dianiline (TGMDA).

12. Matériau composite selon l'une quelconque des revendications 1 à 11, caractérisé en ce que le premier réseau est polymérisé et/ou réticulé avec une diamine.

13. Matériau composite selon la revendication 12, caractérisé en ce que la diamine est la 4,4' diaminodiphénylsulfone (DDS).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,Y | FR-A-2 529 215  (ELECTRICITE DE FRANCE) <br> * Revendications  1-7;  page  6, lignes 17-22; exemples 2,3 * | 1-10, 12 | C 08 L  63/00 <br> C 08 J  5/24  // <br> (C 08 L  63/00 <br> C 08 L  67:06  ) |
| | --- | | |
| Y | FR-A-2 110 159  (QUAKER OATS CO.) <br> * Revendications  1,7,12,13,14; page  4,  lignes  6-17;  page  6, ligne 21 - page 7, lignes  42-45; page  8,  lignes  6-14;  exemples 27,28 * | 1-10, 12 | |
| | --- | | |
| A | FR-A-2 519 639  (TOHO BESLON) <br><br> * Revendications  1-4,23;  pages 1,2, ligne 23; page 3, ligne 24 - page  4, ligne 10; page 11, ligne 30 - page 12, ligne  9;  exemples 1-9 * | 1,11-13 | |
| | | | DOMAINES TECHNIQUES RECHERCHES (Int. Cl.4) |
| | --- | | C 08 L <br> C 08 J |
| A | US-A-3 574 157  (F. MARKUS) <br><br> * Revendication 1;  colonne  2, ligne 60 - colonne 6,  ligne  36; colonne 7, lignes 19-35; exemples * | 1,4,8, 10,12 | |
| | ----- | | |

Le présent rapport de recherche a été établi pour toutes les revendications

| Lieu de la recherche | Date d'achèvement de la recherche | Examinateur |
|---|---|---|
| LA HAYE | 25-03-1987 | HALLEMEESCH A.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82